# EUROPÄISCHE PATENTSCHRIFT

(11) **EP 0 529 572 B1**
(45) Veröffentlichungstag und Bekanntmachung des Hinweises auf die Patenterteilung: **05.10.1994**
(21) Anmeldenummer: 92114421.8
(22) Anmeldetag: 24.08.1992
(51) Int. Cl.: A47J 37/08

(54) **Brotröster mit einem Kühlsystem für das Gehäuse**
Toaster with cooling system for the housing
Grille-pain avec un système de refroidissement pour le boîtier

(30) Priorität: 24.08.1991 DE 4128174
(43) Veröffentlichungstag der Anmeldung: 03.03.1993
(73) Patentinhaber: Braun Aktiengesellschaft, Frankfurt am Main (DE)
(72) Erfinder: Hahnewald, Andrea, Mercat (ES); Schamberg, Stefan, W-6390 Usingen (DE)

(56) Entgegenhaltungen:
- EP-A- 0 201 818
- FR-A- 2 642 635

## Beschreibung

Die Erfindung betrifft einen Brotröster mit einem Kühlsystem für das Gehäuse gemäß dem Oberbegriff des Patentanspruchs 1.

Aus der DE-OS 31 06 791 ist ein Brotröster bekannt, der eine geschlossene Gehäusewandung aufweist, die den Röstkammerbereich mit Heizelementen und Reflektoren umschließt. Zusätzlich weist die Gehäusewandung einen Luftführungskanal auf, der sich von einer bodenseitigen Eintrittsöffnung bis zu einer an der Deckplatte des Brotrösters angeordneten Austrittsöffnung erstreckt. Die geschlossene Gehäusewandung bildet die äußerste Handung des Gehäuses und der Luftführungskanal ist so angeordnet, daß die aufsteigende Luft die Gehäusewandung durch Konvektion kühlt. Dadurch soll der Benutzer des Brotrösters bei Berührung der Gehäusewandung vor Verbrennungen geschützt werden.

Messungen haben ergeben, daß insbesondere nach mehreren Röstzyklen an der Oberseite des Gehäuses trotz des Luftführungskanals nach wie vor unerwünschte hohe Temperaturen auftreten können. Somit besteht trotzdem noch Verbrennungsgefahr und eine hohe Belastung für die üblicherweise aus Kuststoff bestehenden Gehäusewände.

Eine weitere Möglichkeit zum Absenken der äußeren Gehäusatemperatur ist der US-PS 4 396 825 zu entnehmen. Dieser bekannte Brotröster weist im Inneren ein thermisches Isoliermaterial auf. Das thermische Isoliermaterial schirmt den Luftführungskanal von dem Röstkammerbereich ab. Um eine ausreichende thermische Abschirmwirkung zu erzielen, muß das Isoliermaterial ausreichend dick gestaltet sein, was zu einer Verbreiterung des Gehäuses führt und mit zusätzlichen Kosten verbunden ist. Die Abschirmwirkung ist zudem im wesentlichen auf die Seitenwände und weniger auf den oberen Bereich des Brotrösters gerichtet. Im oberen Bereich läßt sich das plattenförmige Isoliermaterial schlecht an die Gestalt des Brotrösters und den Luftführungskanal anpassen.

Weiter ist aus der EP-A 0 201 818 ein elektrischer Brotröster mit einem mäanderförmigen Kühlsystem für das Gehäuse bekannt. Das mäanderförmige kühlsystem erreicht Gehäusetemperaturen, die im Bereich der Hauttemperatur liegen. Wegen des mäanderförmigen Verlaufs des Luftführungskanals nimmt aber gleichfalls die Breite das bekannten Brotrösters zu.

Es ist daher Aufgabe der Erfindung, einen gattungsgemäßen Brotröster zu schaffen, der insbesondere im oberen Gehäusebereich und dort speziell wiederum im Bereich der deckplattenseitigen Austrittsöffnung bei dennoch geringen Gehäusebreiten eine verbesserte Kühlwirkung aufweist.

Diese Aufgabe wird durch die Merkmale des kennzeichnenden Teils des Patentanspruchs 1 gelöst.

Nach der Erfindung werden in oberen Bereich des Luftführungskanals Mittel vorgesehen, die eine Luftstromaufteilung vornehmen. Der aufsteigende Luftstrom wird in einen ersten Anteil, der an der äußeren Gehäusewandung des Brotrösters entlangstreicht und in einen zweiten Anteil aufgeteilt, der dem oberen Bereich der Röstkammer zugeführt wird. Der erste Anteil tritt im oberen Bereich der Deckplatte des Brotrösters aus.

Durch die erfindungsgemäße Aufteilung des aufsteigenden Luftstroms wird die Gehäusewandung deshalb in vorteilhafter Weise verstärkt gekühlt, weil der im oberen Bereich anlangende erwärmte Luftstrom im Volumen und damit der Durchsatz an erwärmter Luft reduziert wird. Es kann daher weniger Wärmeenergie auf die Gehäusewandung übertragen werden. Weiterhin wird der relativ stark erhitzte zweite Luftstromanteil erfindungsgemäß der Röstkammer zugeführt und tritt an der Ein-Ausgabeöffnung für das Röstgut aus. Da im Ein-Ausgabebereich für das Röstgut des Brotrösters die Temperaturen ohnehin weitaus höher, liegen kann der abgezweigte zweite Anteil dort nicht wesentlich zur Temperaturerhöhung beitragen.

Es hat sich gezeigt, daß durch die erfindungsgemäße Maßnahme trotz des verringerten Luftvolumens des ersten Anteils eine erhöhte Kühlwirkung erzielt wird. Die aufgrund der Verringerung des Durchsatzes weitgehend ungehinderte verlaufende Strömung führt nämlich in vorteilhafter Weise zu einer verstärkten und ungehinderte Abführung der Wärme durch Konvektion.

Nach einer Weiterbildung der Erfindung bestehen die Mittel zur Luftstromaufteilung aus Umlenklappen, die ihrerseits wiederum als in den Luftführungskanal hineinragenden Wandungen ausgebildet sind und mit denen auf einfache Weise die Luftstromaufteilung realisiert werden kann. Werden die Umlenklappen zur Luftstromaufteilung an dem Reflektor befestigt, ergibt sich ein fertigungstechnischer Vorteil. Dieser fertigungstechnische Vorteil wird weiter erhöht, wenn die Umlenklappen als umgebogene Blechbestandteile des Reflektors und damit einstückig mit diesem ausgebildet sind.

Verlaufen die Umlenklappen nach Anspruch 5, ergibt sich eine erhöhte Strömungsgeschwindigkeit des ersten Anteils, der den oberen Bereich der Gehäusewand über deren gesamten Verlauf verstärkt kühlt.

Eine besonders gute Kühlwirkung ergibt sich, wenn die Länge der Umlenklappen in etwa ein Fünftel der Länge des Luftführungskanals beträgt. Würde die Luftstromaufteilung noch früher erfolgen, wäre der aufsteigende Luftstrom noch nicht ausreichend erwärmt und die Strömungsgeschwindigkeit für den ersten Anteil würde sich verringern. Damit könnte weniger Wärme in der gleichen Zeit abtransportiert werden. Insgesamt würde sich die Sogwirkung an der bodenseitigen Eintrittsöffnung für den kühlen Luftstrom und damit auch der Durchsatz verringern.

Werden die Umlenklappen nach Anspruch 7 ausgebildet, wird ein größerer Anteil an erwärmter Luft erfaßt, der der Röstkammer zugeführt werden soll und damit der erste Anteil vermindert.

Die Weiterbildung des Brotrösters nach Anspruch 8 hat den Vorteil, daß der oftmals aus Kunststoff bestehende Umlenkbogen besonders wirksam gekühlt wird. Dabei wird die Tatsache ausgenutzt, daß bei entsprechender Gestalt der Umlenklappen und des Umlenkbogens ein entlang der Umlenklappen fließender laminarer Luftstrom entsteht, dessen Grenzschicht immer so noch weit vom Umlenkbogen entfernt verläuft, daß noch Raum für einen weiteren Luftstrom vorhanden wäre. Dieser Luftstrom tritt dann auch tatsächlich dergestalt auf, daß aufgrund des Unterdrucks im oberen Bereich des Luftführungskanals in diesen von außen Umgebungsluft einströmt. Dadurch wird das freie Ende des Umlenkbogens laufend durch einen Strom relativ kühler Außenluft und damit sehr wirksam gekühlt.

Nachfolgend wird die Erfindung anhand der Zeichnung näher beschrieben. Es zeigen:
Fig. 1 einen Brotröster nach dem Stand der Technik im Querschnitt;
Fig. 2 einen Schnitt durch einen erfindungsgemäßen Brotröster.

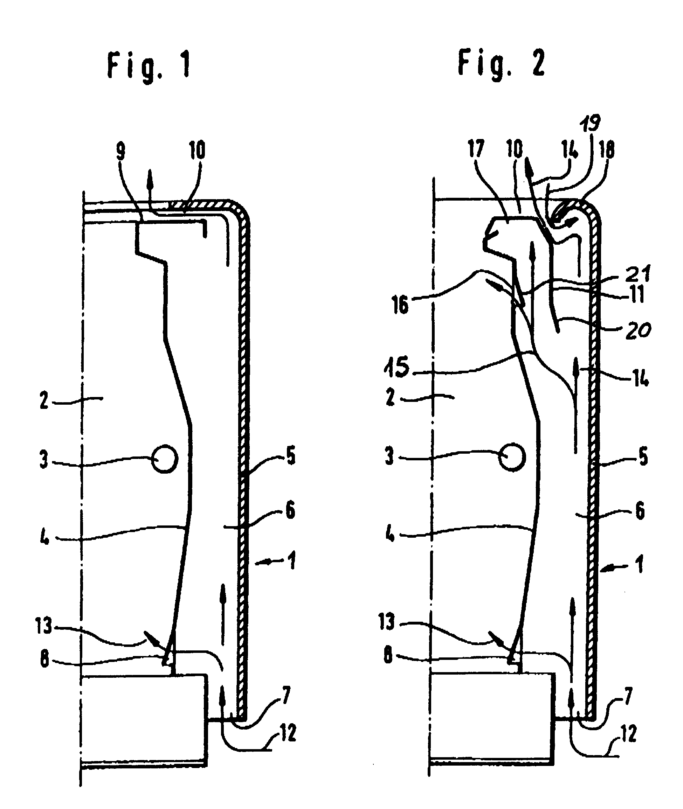

Der Brotröster 1 in Fig. 1 gemäß dem Stand der Technik (Toaster Modell T 038 der Firma Rowenta) ist zur vereinfachten Schnittdarstellung nur halbseitig abgebildet. Der bekannte Brotröster 1 weist eine Gehäusewandung 5, Heizelemente 3, eine Röstkammer 2 und Reflektoren 4 auf, von denen nur einer abgebildet ist. Die Gehäusewandung 5 ist mit Abstand zu der Rückseite des Reflektors 4 angeordnet und bildet so einen Luftführungskanal 6, der im Bodenbereich des Brotrösters 1 eine Eintrittsöffnung 7 aufweist.

Die Heizelemente 3 befinden sich im Betrieb auf einer Temperatur von etwa 900° C. Durch diese hohe Temperatur werden die umliegenden Blechteile, wie die Reflektoren 4 und die Gehäusewandung 5 aufgeheizt. Gleichzeitig wird die in der Röstkammer befindliche Luft erwärmt und steigt nach oben und verläßt den Brotröster 1 über dessen Ein-Ausgabeöffnung für das Röstgut, die in dessen Deckplatte 9 ausgebildet ist. Das Aufsteigen der erwärmten Luft erzeugt einen Unterdruck in der Röstkammer 2, der das Einsaugen von Außenluft 12 an der bodenseitigen Eintrittsöffnung 7 hervorruft. Von den eingetretenen Luftstrom 12 wird ein Anteil 13 über Schlitze 8 der Röstkammer 2 zugeführt. Der verbleibende Anteil des eingesaugten Luftstroms 12 steigt in dem Führungskanal 6 nach oben und kühlt die Gehäusewandung 5.

An der Oberseite der Gehäusewandung 5 befindet sich ein Umlenkbogen, der den sich immer weiter erwärmenden Luftstrom im Führungskanal 6 um 90° parallel zur Deckplatte 9 umlenkt. An einer deckplattenseitigen Austrittsöffnung 10 gelangt der erwärmte Luftstrom ebenso ins Freie wie der Anteil 13, der über die Röstkammer 2 senkrecht nach oben strömt.

Fig. 2 zeigt einen erfindungsgemäßen Brotröster 1. Im Bodenbereich wird wiederum während des Betriebs des Brotrösters 1 aufgrund des Unterdrucks in der Röstkammer 2 über die Eintrittsöffnung 7 kühlere Außenluft 12 angesaugt. Wiederum gelangt ein anteiliger Luftstrom 13 über Öffnungen 8 im Reflektor in den Bodenbereich der Röstkammer 2.

Der verbleibende Anteil des frisch eingesaugten Luftstroms steigt in dem Führungskanal 6 nach oben. Der Führungskanal 6 weist erfindungsgemäß im oberen Bereich als Umlenklappen ausgebildete Mittel 11 zur Luftstromaufteilung auf. Der erste Anteil 14 strömt weiter als laminare Strömung zu dem Umlenkbogen 18 und schließlich zur deckplattenseitigen Austrittsöffnung 10. Der Umlenkbogen 18 und der Umlenklappen 11 sind so gestaltet, daß neben dem laminaren, entlang der Umlenklappen 11 ausströmenden ersten Anteils 14 gleichzeitig zwischen dem ausströmenden ersten Anteil 14 und dem freien Ende des Umlenkbogens 18 von außen Umgebungsluft 19 in den oberen Bereich des Führungskanals 6 einströmt. Die Umgebungsluft 19 kann deshalb einströmen, weil zum einen der entlang der Umlenklappen 11 fließende erste Anteil 14 laminaren Strömungscharakter aufweist und seine Grenzschicht noch Raum zum freien Ende der Umlenklappen 18 offen läßt und weil zum anderen in dem Führungskanal 6 im oberen Bereich ein Unterdruck herrscht. Dadurch wird das freie Ende des Umlenkbogens 18 besonders wirksam durch einen anhaltenden Strom von Außenluft gekühlt.

Der zweite von dem aufsteigenden Luftstrom abgeteilte Anteil 15 wird über Öffnungen 16 dem oberen Bereich der Röstkammer 2 zugeführt. In der in Fig. 2 gezeigten Ausführungsform bestehen die Mittel zur Luftstromaufteilung aus Umlenklappen 11. Nach Fig. 2 ist der Umlenklappen 11 parallel zur Gehäusewandung 5 ausgerichtet und weist im vorderen Bereich eine Abknickung 20 auf, die als Trichter wirkt. Der von dem aufgestiegenen Luftstrom abgetrennte zweite Anteil 15 kann infolge der Zuführung zur Röstkammer 2 keinerlei Wärme auf die Gehäusewandung 5 übertragen. Vielmehr bildet der den Luftstrom aufteilende Umlenklappen 11 gemäß der Ausführungsform nach Fig. 2 zusammen mit der Rückseite des Reflektors 4 einen sackgassenähnlichen zweiten Luftführungskanal 17, der für den eingefangenen Luftstrom über die Öffnungen 16 nur Ausweichmöglichkeiten zum oberen Bereich der Röstkammer 2 zuläßt.

In Fig. 2 ist der Umlenklappen 11, der als luftstromaufteilendes Mittel wirkt, an dem Reflektor 4 selbst befestigt. Beispielsweise kann der Umlenklappen 11 an dem Reflektor 4 angenietet sein. Ebenso ist es möglich, die Umlenklappen 11 als verlängertes Blechstück aus des Reflektors 4 durch Umbiegen auszugestalten. In diesem Fall bilden die Umlenklappen 11 zusammen mit dem Reflektor 4 ein einstückiges Teil. Die trichterförmige Abknickung 20 am freien Ende der Umlenklappen 11, das in den aufsteigenden Luftstrom ragt, kann je nach Winkelstellung einen größeren oder kleineren zweiten Anteil 15 abzweigen. Eine besonders einfache Aufteilung des Luftstromes kann dann erreicht werden, wenn unter Verzicht auf gesonderte Umlenklappen 11 das die Öffnung 16 teilweise einfassende Leitblech 21 so groß dimensioniert ist, daß es die Luftstrom aufteilende Funktion der Umlenklappen 11 übernehmen kann.

Bevorzugt weist der Umlenklappen 11 in Fig. 2 eine Länge von etwa einem Fünftel der Länge das Luftführungskanals 6 auf. Dadurch ergeben sich besonders vorteilhafte Kühlwirkungen an der äußeren Gehäusewandung 5. Die aufsteigende Luft besitzt im oberen Bereich eine derartige Geschwindigkeit, daß der erste Anteil 14 auch an der Gehäusewand 5 laminar strömt und durch Konvektion die gewünschte Kühlwirkung hervorruft.

Der Umlenkbogen 18 ist mit seinem freien Ende unter Ausbildung eines Spaltes auf den Umlenklappen 11 gerichtet. Der Umlenklappen 11 ist im Bereich des freien Endes des Umlenkbogens 18 zu einer schiefen Ebene abgeknickt. Insgesamt ergibt sich durch diese Gestaltung vor dem Austritt an der Austrittsöffnung 10 ein S-förmiger, laminarer Strömungsverlauf.

Die Umlenklappen 11 zur Srtromaufteilung können an allen Seiten des Brotrösters 1 ausgebildet sein und sind nicht nur auf die in Fig. 2 gezeigte Seitenwandung 5 des Brotrösters 1 beschränkt.

## Patentansprüche

1. Brotröster mit einem Kühlsystem für das Gehäuse, bestehend aus einer Röstkammer (2) mit Heizelementen (3) und Reflektoren (4), einer Deckplatte (9), die eine Einführungsöffnung für das Röstgut aufweist und die die Röstkammer (2) abdeckt und einer geschlossenen, äußeren Gehäusewandung (5), die den Röstkammerbereich umschließt und einen Luftführungskanal (6) aufweist, der sich von einer bodenseitigen Eintrittsöffnung (7) bis zu einer deckplattenseitigen Austrittsöffnung (10) erstreckt, wobei die in dem Luftführungskanal (6) aufsteigende Luft die äußere Gehäusewandung (5) durch Konvektion kühlt,
**dadurch gekennzeichnet**
daß im oberen Bereich des Luftführungskanals (6) Mittel zur Luftstromaufteilung vorgesehen sind, die den aufsteigenden Luftstrom in einen ersten Anteil (14), der über die deckplattenseitige Austrittsöffnung (10) abströmt und einen zweiten Anteil (15) aufteilt, der dem oberen Bereich der Röstkammer (2) zugeführt wird.

2. Brotröster nach Anspruch 1,
**dadurch gekennzeichnet**
daß die Mittel Umlenklappen (11) sind, die aus von der Seite der Röstkammer (2) her in den Luftführungskanal (6) hineinragenden Wandungen bestehen.

3. Brotröster nach Anspruch 2,
**dadurch gekennzeichnet**
daß die Umlenklappen (11) zur Luftstromaufteilung an dem Reflektor (4) befestigt sind.

4. Brotröster nach Anspruch 3,
**dadurch gekennzeichnet**
daß die Umlenklappen (11) zur Luftstromaufteilung einstückige Bestandteile des Reflektors (4) sind.

5. Brotröster nach Anspruch 2,
**dadurch gekennzeichnet**
daß die Umlenklappen (11) zur Luftstromaufteilung sich längs der gesamten Austrittsöffnung (10) abschnittsweise auch parallel zur Gehäusewandung (5) erstrecken.

6. Brotröster nach Anspruch 2,
**dadurch gekennzeichnet**
daß die Länge der Umlenklappen (11) zur Luftstromaufteilung etwa ein Fünftel der Länge des Luftführungskanals (6) beträgt.

7. Brotröster nach Anspruch 2,
**dadurch gekennzeichnet**
daß die Umlenklappen (11) zur Luftstromaufteilung in ihrem Anfangsbereich trichterförmige Abknickungen (20) in Richtung der Gehäusewandung (5) aufweisen.

8. Brotröster nach Anspruch 2,
**dadurch gekennzeichnet,**
daß die Gehäusewandung (5) im oberen Bereich einen Umlenkbogen (18) aufweist und daß die Gestalt des Umlenklappens (11) und die des freien Endes des Umlenkbogens (18) so gewählt wird, daß durch die Austrittsöffnung (10) zum einen der erste Anteil (14) als laminarer Luftstrom entlang des Umlenkklappens (11) ausströmt und zum anderen gleichzeitig zwischen dem ausströmenden ersten Anteil (14) und dem freien Ende des Umlenkbogens (18) von außen Umgebungsluft (19) in den oberen Bereich des Führungskanals (6) einströmt.

## Claims

1. A bread toaster with a cooling system for the casing, comprising a toasting chamber (2) with heating elements (3) and reflectors (4), a cover plate (9) having an opening for receiving the article to be toasted and covering the toasting chamber (2), and a closed external casing shell (5) that encases the region of the toasting chamber and includes an air guide channel (6) that extends from an inlet opening (7) provided at the bottom up to an outlet opening (10) provided in the cover plate, with the rising air inside the air guide channel (6) cooling the external casing shell (5) by convection,
**characterized in that** means for dividing the air flow are provided in the upper region of the air guide channel (6), said means dividing the rising air flow into a first portion (14) that is discharged through the outlet opening (10) in the cover plate, and into a second portion (15) that is delivered to the upper region of the toasting chamber (2).

2. A bread toaster as claimed in claim 1,
**characterized in that** the means are baffles (11) comprised of walls extending from the side of the toasting chamber (2) into the air guide channel (6).

3. A bread toaster as claimed in claim 2,
**characterized in that** the baffles (11) for dividing the air flow are secured to the reflector (4).

4. A bread toaster as claimed in claim 3,
**characterized in that** the baffles (11) for dividing the air flow are integral parts of the reflector (4).

5. A bread toaster as claimed in claim 2,
**characterized in that** the baffles (11) for dividing the air flow extend along the full length of the outlet opening (10), in sections also parallel to the casing shell (5).

6. A bread toaster as claimed in claim 2,
**characterized in that** the length of the baffles (11) for dividing the air flow is about one fifth of the length of the air guide channel (6).

7. A bread toaster as claimed in claim 2,
**characterized in that** the baffles (11) for dividing the air flow have funnel-shaped bends (20) at their upstream ends which extend in the direction of the casing shell (5).

8. A bread toaster as claimed in claim 2,
**characterized in that** the casing shell (5) has in its upper area a deflection bow (18), and that the shapes of the baffle (11) and of the free end of the deflection bow (18) are selected such that the first air-flow portion (14) exits the outlet opening (10) in a laminar pattern flowing along the baffle (11), while at the same time ambient air (19) from outside enters the upper region of the air guide channel (6) through the space between the outflowing first air-flow portion (14) and the free end of the deflection bow (18).

## Revendications

1. Grille-pain comportant un système de refroidissement pour le boîtier, constitué par une chambre de grillage (2) avec des éléments de chauffage (3) et des réflecteurs (4), par une plaque de couverture (9) qui présente une ouverture d'entrée pour le pain à griller et qui recouvre la chambre de grillage (2), et par une paroi de boîtier (5) extérieure, fermée, qui entoure la région de la chambre de grillage et qui présente un canal de guidage d'air (6) qui s'étend depuis une ouverture d'entrée (7) du côté fond jusqu'à une ouverture de sortie (10) du côté de la plaque de couverture, l'air qui monte dans le canal de guidage d'air (6) refroidissant par convection la paroi de boîtier extérieure (5),
caractérisé en ce que dans la région supérieure du canal de guidage d'air (6) on prévoit des moyens pour le partage du courant d'air, qui partagent le courant d'air montant en une première partie (14) qui sort via l'ouverture de sortie (10) du côté de la plaque de couverture, et en une seconde partie (15) qui est amenée à la région supérieure de la chambre de grillage (2).

2. Grille-pain selon la revendication 1,
caractérisé en ce que les moyens sont des volets de renvoi (11) qui sont constitués par des parois pénétrant depuis le côté de la chambre de grillage (2) dans le canal de guidage d'air (6).

3. Grille-pain selon la revendication 2,
caractérisé en ce que les volets de renvoi (11) pour le partage du courant d'air sont fixés sur le réflecteur (4).

4. Grille-pain selon la revendication 3,
caractérisé en ce que les volets de renvoi (11) pour le partage du courant d'air sont des composants en une seule pièce du réflecteur (4).

5. Grille-pain selon la revendication 2,
caractérisé en ce que les volets de renvoi (11) pour le partage du courant d'air s'étendent le long de l'ensemble de l'ouverture de sortie (10), et par sections également parallèlement par rapport à la paroi de boîtier (5).

6. Grille-pain selon la revendication 2,
caractérisé en ce que la longueur des volets de renvoi (11) pour le partage du courant d'air s'élève à environ un cinquième de la longueur du canal de guidage d'air (6).

7. Grille-pain selon la revendication 2,
caractérisé en ce que les volets de renvoi (11) pour le partage du courant d'air présentent dans leur région initiale des plis (20) en forme d'entonnoir en direction de la paroi de boîtier (5).

8. Grille-pain selon la revendication 2,
caractérisé en ce que la paroi de boîtier (5) présente dans la région supérieure un coude de renvoi (18) et en ce que la forme du volet de renvoi (11) et celle de l'extrémité libre du coude de renvoi (18) sont choisies de telle sorte que via l'ouverture de sortie (10) d'une part la première partie (14) sort en tant que courant d'air laminaire le long du volet de renvoi (11) et d'autre part de l'air ambiant (19) rentre en même temps depuis l'extérieur dans la région supérieure du canal de guidage (6) entre la première partie (14) sortant et l'extrémité libre du coude de renvoi (18).
